# EUROPÄISCHE PATENTANMELDUNG

(11) **EP 1 125 974 A1**
(43) Veröffentlichungstag der Anmeldung: **22.08.2001**
(21) Anmeldenummer: 00125753.4
(22) Anmeldetag: 24.11.2000
(51) Int. Cl.: C08K 3/00, C08K 5/548, C08L 21/00

(54) **Gummimischung mit festen magnetisierbaren Partikeln darin, die steifer sind als die anderen Bestandteile der Gummimischung**

(30) Priorität: 18.02.2000 US 183561 P; 18.02.2000 US 506332
(71) Anmelder: Continental Aktiengesellschaft, 30165 Hannover (DE)
(72) Erfinder: Papp, Frank P., Charlotte, North Carolina 28270 (US); Oxley, Duane M., Fort Mill, South Carolina 29715 (US); Giustino, James M., Waxhaw, NC 28173 (US)

(57) **Zusammenfassung**

Diese Erfindung liefert eine Gummimischung, die mit einem ungewöhnlich hohen Anteil an festen magnetisierbaren Partikeln wie z.B. Eisenoxid oder Strontiumferrit gefüllt ist, aber dennoch kaum anfällig ist für die Entstehung und auch die Ausbreitung von Rissen. Das ermöglicht die Erzeugung stark magnetisierter Bereiche in Gummiartikeln, die aus einer Gummimischung nach dieser Erfindung hergestellt sind. Eine so starke Magnetisierung liefert - auch bei Anwendungen, bei denen aufgrund von Deformation eine große Distanz zwischen einer Reihe von magnetisierten Bereichen und einem Sensor notwendig ist - auch dann noch gut reproduzier- und erkennbare Signale, wo verfälschende Magnetfelder existieren.

Die magnetisierbaren Partikel werden mit Hilfe eines Haftvermittlers, nämlich eines Organosilan-Polysulfids, an die Gummimatrix gebunden.

## Beschreibung

Diese Erfindung bezweckt insbesondere eine weitere Verbesserung der Erfindung von Herrn Drähne und Dr. Becherer mit der Bezeichnung "Verfahren und Vorrichtung zur Schlupfregelung und/oder zur Bestimmung der Längskraft oder walkarbeit-proportionaler Parameter, und Fahrzeugreifen dafür" offengelegt in **WO 96/10505** und aus dieser internationalen Patentanmeldung abgeleitet **US-Patent 5,913,240** und **EP 0 783 419 B1,** wobei alle drei die Priorität aus der **DE-OS 44 35 160** beanspruchen. Weiterhin wird diese Erfindung vorzugsweise verbunden mit der Offenlegung von **DE-OS 196 46 251,** die ein Verfahren und eine Vorrichtung zur Erzeugung starker magnetischer Felder in Reifenseitenwänden lehrt. Die Priorität dieser deutschen Patentanmeldung wurde für **US-PS 5,895,854** beansprucht.

Weiterhin vorbekannt sind die deutschen Patentanmeldungen **DE 195 03 468 C1** und **DE 195 03 469 C1,** welche beide am 30. Mai 1996 veröffentlicht werden. Deren Priorität wurde beansprucht für die US-Patente
**US-PS 4,161,120**
**US-PS 4,948,277**
**US-PS 5,017,868**
**US-PS 5,026,178**
**US-PS 5,131,763**
**US-PS 5,261,752**
**US-PS 5,261,753.**

Ferner gehören zum Stande der Technik die europäischen Patentanmeldungen **EP 0 890 752 A2** und **EP 0 890 753 A2,** veröffentlicht am 13. Januar 1999, und **EP 0 892 185 A2,** veröffentlicht am 20. Januar 1999.

Neben den festen magnetisierbaren Partikeln enthält die Gummimischung Moleküle von natürlichen und/oder künstlichen Polymeren und gegebenenfalls von Füllstoffen wie zum Beispiel Ruß, Silica und/oder anderen Zusatzstoffen, die allen Fachleuten der Gummitechnologie gut bekannt sind, wie z.B. Schwefel als kettenbildender Bestandteil, Vulkanisationsbeschleuniger, Vulkanisationsverzögerer und so weiter. Diese umgebenden Moleküle werden im folgenden Text auch als Matrix bezeichnet, in welche die festen magnetisierbaren Partikel eingebettet sind.

**Aufgabe** dieser Erfindung ist es, den bislang bestehenden Konflikt beim Ermitteln der besten Dosis von festen magnetisierbaren Partikeln, die in eine Polymermatrix einzubetten sind, zu entschärfen oder zu lösen; diesen Konflikt haben die Erfinder erkannt in der Konkurrenz zwischen
- dem ersten Ziel des Erreichens einer langen Ermüdungsfestigkeit und einer hohen Festigkeit gegen das Risswachstum, welche beide allenfalls nur eine geringe Dosis oder gar eine Nulldosis von festen, magnetisierbaren Partikeln erlauben, und
- dem zweiten Ziel des Erreichens eines starken magnetischen Signals infolge des Passierens von diskret verteilten magnetisierten Bereichen einer umlaufenden Reihe von magnetisierten Bereichen entlang einem Sensor, was eine hohe Dosis fester magnetisierbarer Partikel verlangt.

In einer Umgebung - wie z.B. einem Fahrzeug - existieren viele geringe magnetische Einflüsse. Der Forderung einer relativ hohen Distanz zwischen den magnetisierten Bereichen eines Reifens und eines Sensors folgend (ca. 12,7 mm = ½ Zoll bei Personenkraftwagen) ist es ein weiteres Ziel dieser Erfindung, die beabsichtigte Folge von Signalen durch starke magnetische Bereiche zu erzeugen, und dabei die Fehlerkennung der Durchlaufzeiten magnetischer Bereiche zu vermeiden und damit auch Fehlmessungen der Kräfte zu vermeiden, die auf einen Reifen wirken, sowie Fehlsignale, die an Bremskraftbegrenzer (ABS) oder Bremsaktuatoren gegeben werden.

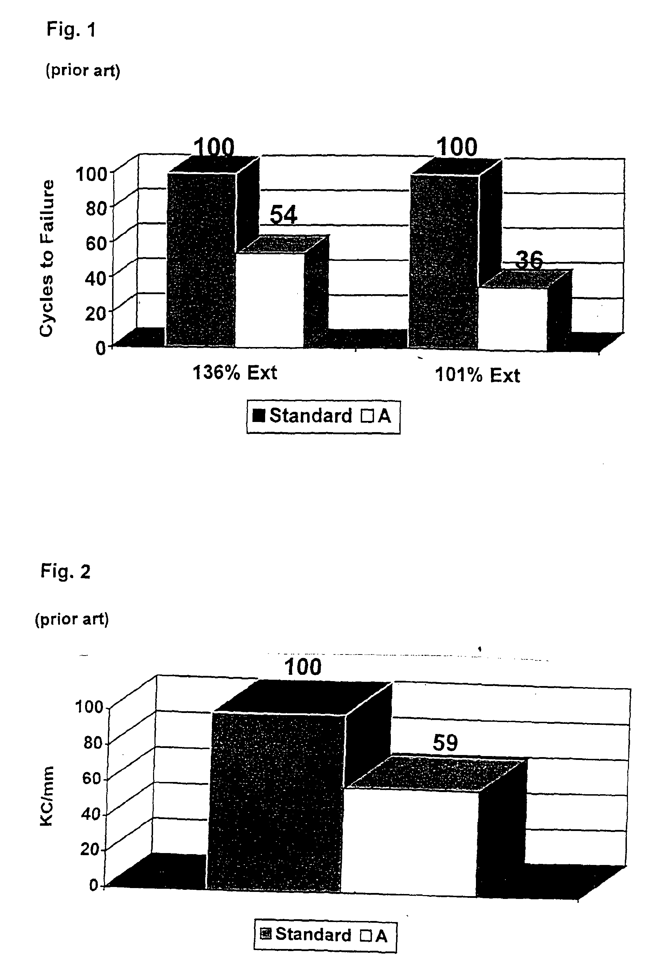

Die Erfinder haben erkannt, dass in denjenigen Gummimischungen, die nach heutigem Stand der Technik bekannt sind, feste magnetisierbare Partikel als Fehlerorte wirken, welche die Entstehung von Rissen und Komponentenfehlern verursachen, wenn sie wiederholter Deformation ausgesetzt werden. Der Nachweis dafür wird in den **Abbildungen 1 und 2** geliefert, welche die Ermüdungsfestigkeit und die Beständigkeit gegen Risswachstum einer standardmäßigen schwarzen Reifenseitenwand-Gummimischung zeigen, gegenüber einer Mischung "A", welche 200 phr eines Ferrit-Zusatzstoffes enthält.

Als **Lösung** haben die Erfinder schließlich einen chemischen Haftvermittler gefunden. Ferner schlagen sie vor, eine für diesen Zweck bislang unbekannte Mischtechnik zu verwenden, um eine chemische Bindung zwischen den magnetisierbaren Partikeln - in dieser Anwendung auch "magnetischer Füller" oder "magnetischer Zusatzstoff" genannt - und der Polymermatrix zu erreichen und dadurch zusätzliche Mechanismen zum Abbau von Ermüdungserscheinungen und Rissenergie zu ermöglichen. Solche chemischen Haftvermittler können organo-funktionale Silanmaterialien sein, vorzugsweise ein Organosilan-Polysulfid und am meisten bevorzugt 3,3'-bis-(Triethoxisilylpropyl)-Tetrasulfid (TESPT) oder 3,3'-bis-(Triethoxisilylpropyl)-Disulfid (TESPD) oder eine TESP-Mischung.

Der Erfindung liegt die Erkenntnis zugrunde, dass der Hauptgrund für Rissentstehung und -fortpflanzung der große Unterschied zwischen der Steifigkeit der Matrix und der der festen magnetisierbaren Partikel ist; leider ist dieser Hauptgrund unvermeidbar. Aber durch eine stärkere Bindung zwischen der Matrix und den festen magnetisierbaren Partikeln kann der Verlust an Ermüdungsfestigkeit und die Anfälligkeit für Risswachstum reduziert werden. Erst diese Erkenntnis ließ die Erfinder ihre Arbeit auf die Verstärkung der Bindung zwischen besagten festen magnetisierbaren Partikeln und den umgebenden Molekülen der Gummiverbindungen konzentrieren und führte zur Fokussierung auf die Suche nach einem geeigneten Haftungsvermittler zwischen beiden so krass unterschiedlichen Stoffen.

Diese Erfindung ermöglicht die Anreicherung einer Gummimischung mit einem hohen Anteil an festen magnetisierbaren Partikeln, ohne die Ermüdungsfestigkeit und die Beständigkeit gegen Risswachstum zu sehr zu verringern. Daher können magnetische Zusatzstoffe erfolgreich in Gummimischungen eingebaut werden, welche für hoch flexible Komponenten, insbesondere für Reifenseitenwände verwendet werden.

Es ist ein großer Vorteil dieser Erfindung, dass ihre Verwirklichung durch die Tatsache erleichtert wird, das man solche organo-funktionalen Silanmaterialien verwenden kann, die in der Gummiindustrie bereits bekannt sind. Aktuell werden jedoch organo-funktionale Silanmaterialien nur in Gummimischungen für Reifenprofile und nicht in Mischungen für Seitenwände verwendet. Bei diesen Profilgummimischungen werden organo-funktionale Silanmaterialien mit Silica verbunden und bewirken die Bindung des Silicas an die Polymermatrix; sie werden dort nicht mit festen magnetisierbaren Partikeln verbunden und bewirken daher keine Bindung solcher Partikel an die Polymermatrix.

Neben den festen magnetisierbaren Partikeln enthält die Gummimischung der vorliegenden Erfindung Moleküle von natürlichen und/oder künstlichen Polymeren und/oder von anderen Zusatzstoffen wie z.B. Carbon Black, Silica und/oder anderen Verbindungen wie z.B. Schwefel als kettenbildender Bestandteil, Vulkanisationsbeschleuniger, Vulkanisationsverzögerer und so weiter. Diese umgebenden Moleküle stellen eine Matrix dar, in welche die festen magnetisierbaren Partikel eingebettet werden. Der Kern der vorliegenden Erfindung liegt in der Verwendung von chemischen Haftvermittlern zur Bindung der magnetisierbaren Partikel eines Magnetpulvers an die Polymermatrix, und der speziellen Mischtechnik zur Maximierung der Reaktion zwischen dem Haftvermittler, dem Magnetpulver und der Polymermatrix.

Der Stand der Technik (Fig. 1 und 2) und die Erfindung (Fig. 3 - 6) werden anhand der folgenden Figuren näher erläutert:
- Fig. 1: zeigt die Ergebnisse eines Dauerversuchs bis zum Bruch bei unterschiedlichen Dehnungen "Ext". Im Vergleich dazu steht eine Probe nach früherem Stand der Technik mit der Bezeichnung "Standard", hergestellt aus einer vulkanisierten Standard-Gummimischung für Seitenwände ohne magnetisierbare Partikel, und eine weitere Probe nach früherem Stand der Technik mit der Bezeichnung "A", hergestellt aus der gleichen vulkanisierten Gummimischung, aber mit 200 phr eines Ferrit-Zusatzstoffes.
- Fig. 2: zeigt die Ergebnisse des bekannten DeMattia-Versuchs mit durchbohrten Proben aus den gleichen Materialien wie in Abb. 1. "KC" bedeutet "Kilocycles", d.h. Einheiten von Tausend Zyklen Ladung und Entladung. Diese Zahl wird dividiert durch die Länge des Risswachstums, gemessen in Millimeter, so dass sich die Maßeinheit "KC/mm" ergibt.

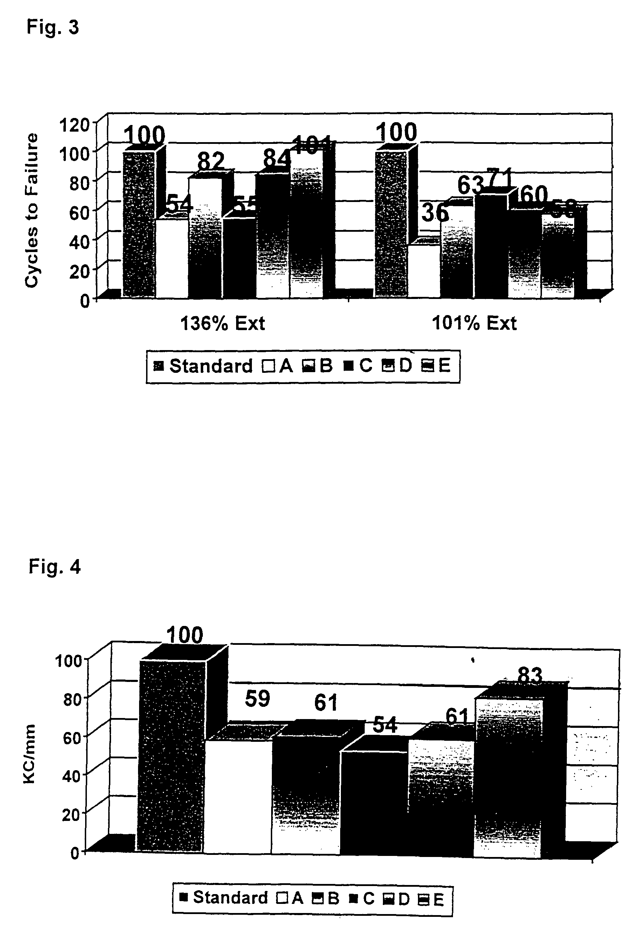

- Fig. 3: zeigt analog zu Abb. 1 die Ergebnisse der Dauerversuche bis zum Bruch mit Proben einer vulkanisierten Standard-Gummimischung für Seitenwände und vulkanisierten Gummimischungen A bis E nach der Erfindung, dargestellt im einzelnen in Tab. B.
- Fig. 4: zeigt analog zu Abb. 2 die Ergebnisse des De Mattia-Versuchs mit durchbohrten Proben aus den Gummimischungen, die in der Beschreibung zu Abb. 3 genannt sind.

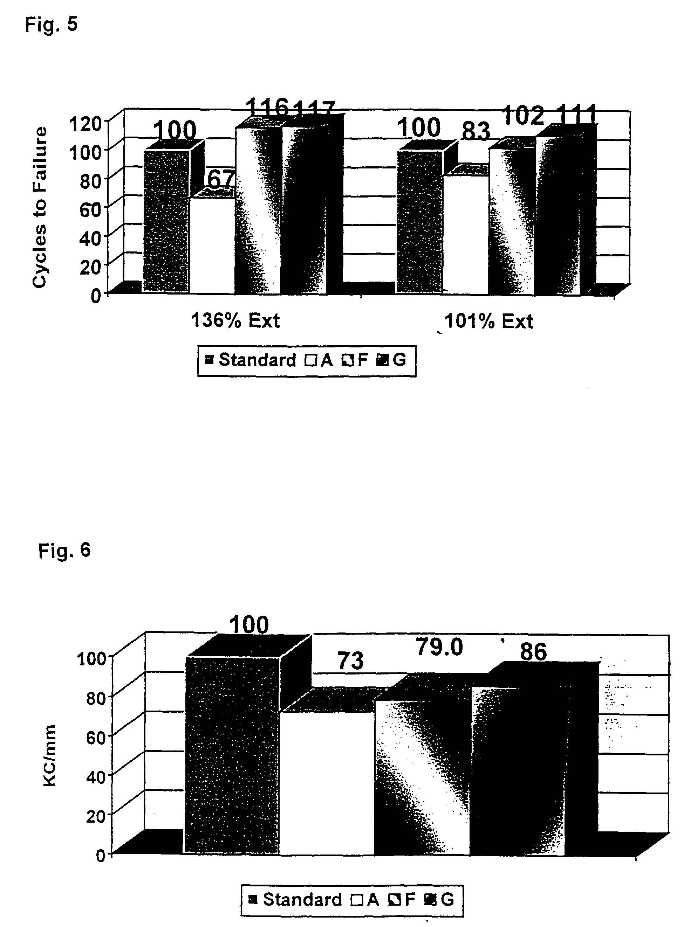

- Fig. 5: zeigt analog zu Abb. 1 und Abb. 3 die Ergebnisse der Dauerversuche bis zum Bruch mit Proben einer vulkanisierten Standard-Gummimischung für Seitenwände und vulkanisierten Gummimischungen A, F und G nach der Erfindung, dargestellt im einzelnen in Tab. C.
- Fig. 6: zeigt analog zu Abb. 2 und Abb. 4 die Ergebnisse des De Mattia-Versuchs mit durchbohrten Proben aus den Gummimischungen, die in der Beschreibung zu Abb. 5 genannt sind.

Die Darstellung der bevorzugten Ausführungsarten dieser Erfindung ist in drei Teile gegliedert:
- Erstens: wird ein Modell des Reaktionsmechanismus dargestellt, um ein Verständnis des Wesens der chemischen Bindungen zwischen dem magnetischen Zusatzstoff, dem Haftvermittler, und dem Polymernetz zu ermöglichen.
- Zweitens: wurden im Labor Versuche durchgeführt, die die Vorzüge der Verwendung des Haftvermittlers und der speziellen Mischtechnik zeigen sollen, und
- drittens: wird im Detail die beste Art und Weise der Verarbeitung einer solchen Gummimischung dargestellt, die 2 bis 8 phr nach Gewicht eines Organosilan-Polysulfids enthält.

### 1. Reaktionsmechanismus:

Es wird beabsichtigt, dass die the organo-funktionalen Silan-Haftvermittler potentielle Haftstandorte am Strontiumferrit-Molekül haben sollen, wie im folgenden dargestellt:

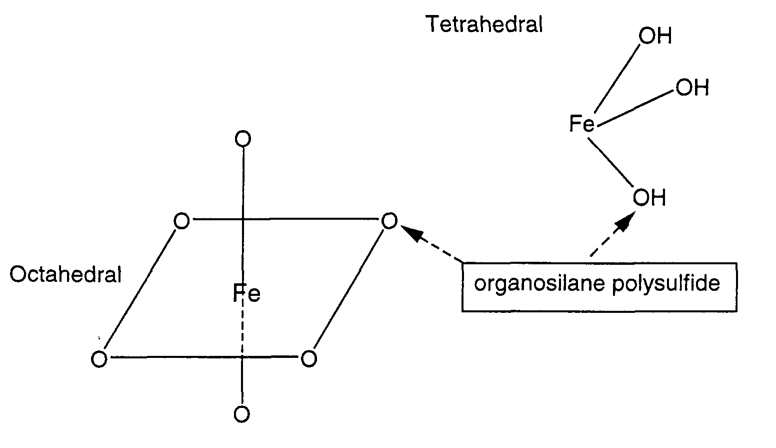

Das organo-funktionale Silan kann sich an das Ferrit in einem ähnlichen Mechanismus wie an Silica binden.

### 2. Versuchsbeschreibung:

Eine Rezeptur für eine schwarze Standard-Seitenwand wurde so verändert, dass sie 50 phr bis 250 phr eines magnetischen Zusatzstoffs beinhaltet. Für diese Versuchslaborstudie wurden 200 phr eines Strontiumferrits verwendet. Tabelle A zeigt die Rezeptur für die schwarze Standard-Seitenwand und,die Rezeptur für die Ferrit-Seitenwand-Mischung A, die die besagte Menge von 200 phr Strontiumferrit enthält.

### Beschriftung:

- Tetrahedral = Tetraeder
- Octahedral = Oktaeder
- organosilane polysulfide = Organosilan-Polysulfid

**Tabelle A**

| Bestandteil | Schwarze Standard-Reifenseitenwand | Ferrit-Seitenwand A |
|---|---|---|
| Erster Durchgang | phr | phr |
| NR | 55 | 40 |
| Hoch Cis BR | 45 | 60 |
| N660 Carbon Black | 52 | 48 |
| Aromatenöl | 16 | 12 |
| Klebrigmachendes Harz | 3 | 3 |
| Antidegradanzien | 4,8 | 9,6 |
| Mikrokristallines Paraffin | 2,2 | 2,2 |
| Zinkoxid | 2,7 | 2,7 |
| Stearinsäure | 2 | 2 |
| Strontiumferrit | - | 100 |

| Zweiter Durchgang | | |
|---|---|---|
| N660 Carbon Black | - | 4 |
| Aromatenöl | - | 4 |
| Strontiumferrit | - | 100 |

| Dritter Durchgang | | |
|---|---|---|
| TBBS Beschleuniger | ,5 | ,5 |
| Löslicher Schwefel | 1,92 | 1,92 |

Die weiter oben beschriebenen Figuren 1 und 2 beweisen den Verlust an Ermüdungsfestigkeit und Beständigkeit gegen Risswachstum bei Mischung A, wenn 200 phr Strontiumferrit zu einer Rezeptur für eine schwarze Standard-Reifenseitenwand hinzugefügt werden, trotz der Änderung der Polymermischung zur Erhöhung der Ermüdungsfestigkeit.

Tabelle B zeigt die modifizierte Rezeptur für die Ferrit-Seitenwand A, mit den Bezeichnungen Ferrit-Seitenwand B, C, und D mit jeweils 4, 6, bzw. 8 phr TESPT (Trieythoxysilylpropyl-Tetrasulfid), und Ferrit-Seitenwand E mit 4 phr TESPD, (Trieythoxysilylpropyl-Disulfid), wobei es sich bei beiden um organo-funktionale Silan-Haftvermittler handelt.

**Tabelle B**

| Bestandteil | Schwarze Standard-Reifenseitenwand | Ferrit-Seitenwand A | Ferrit-Seitenwand B | Ferrit-Seitenwand C | Ferrit-Seitenwand D | Ferrit-Seitenwand E |
|---|---|---|---|---|---|---|
| Erster Durchgang | phr | phr | phr | phr | phr | phr |
| NR | 55 | 40 | 40 | 40 | 40 | 40 |
| Hoch Cis BR | 45 | 60 | 60 | 60 | 60 | 60 |
| N660 Carbon Black | 52 | 48 | 48 | 48 | 48 | 48 |
| Aromatenöl | 16 | 12 | 12 | 12 | 12 | 12 |
| Klebrigmachendes Harz | 3 | 3 | 3 | 3 | 3 | 3 |
| Antidegradanzien | 4,8 | 9,6 | 9,6 | 9,6 | 9,6 | 9,6 |

| Mikrokristallines Paraffin | 2,2 | 2,2 | 2,2 | 2,2 | 2,2 | 2,2 |
|---|---|---|---|---|---|---|
| Zinkoxid | 2,7 | 2,7 | 2,7 | 2,7 | 2,7 | 2,7 |
| Stearinsäure | 2 | 2 | 2 | 2 | 2 | 2 |
| Strontiumferrit | - | 100 | 100 | 100 | 100 | 100 |
| TESPT | - | - | 2 | 3 | 4 | |
| TESPD | - | - | - | - | - | 2 |

| Zweiter Durchgang | | | | | | |
|---|---|---|---|---|---|---|
| N660 Carbon Black | - | 4 | 4 | 4 | 4 | 4 |
| Aromatenöl | - | 4 | 4 | 4 | 4 | 4 |
| Strontiumferrit | - | 100 | 100 | 100 | 100 | 100 |
| TESPT | - | - | 2 | 3 | 4 | - |
| TESPD | - | - | - | - | - | 2 |

| Dritter Durchgang | | | | | | |
|---|---|---|---|---|---|---|
| TBBS Beschleuniger | ,5 | ,5 | ,5 | ,5 | ,5 | ,5 |
| Löslicher Schwefel | 1,92 | 1,92 | 1,92 | 1,92 | 1,92 | 1,92 |
| | | | | | | |

**Figur 3** zeigt erhebliche Verbesserungen in der Ermüdungsfestigkeit bei Verwendung von organo-funktionalen Silan-Haftvermittlers. **Figur 4** zeigt, dass es bei Verwendung von TESPT keine große Verbesserung in der Festigkeit gegen Risswachstum gibt, aber eine beträchtliche Verbesserung kann erzielt werden bei Verwendung von TESPD-Material.

Tabelle C zeigt schließlich den Ersatz von 4 und 6 phr eines TESPD-Haftvermittlers und einer Mischtechnik zur Reaktionsoptimierung zwischen dem Haftvermittler mit dem magnetischen Füller und der Polymermatrix. Die in Tabelle D dargestellte Mischtechnik verwendet einen Innenmischer. Die Hälfte des Strontiumferrits und das gesamte TESPD werden bereits früh im ersten Durchgang zusammengegeben, um die Reaktion früher zu starten und so mehr·Zeit für eine vollständigere Reaktion zwecks stärkerer Haftung an der Gummimatrix zu gewinnen.

**Tabelle C**

| Bestandteil | Schwarze Standard-Reifenseiten -wand | Ferrit-Seitenwand A | Ferrit-Seitenwand F | FerritSeiten-wand G |
|---|---|---|---|---|
| Erster Durchgang | phr | phr | phr | phr |
| NR | SS | 40 | 40 | 40 |
| Hoch Cis BR | 45 | 60 | 60 | 60 |
| Strontiumferrit | - | 100 | 100 | 100 |
| TESPD | - | - | 4 | 6 |

| Ruß N660 (Carbon Black) | 52 | 48 | 48 | 48 |
|---|---|---|---|---|
| Aromatenöl | 16 | 12 | 12 | 12 |
| Klebrigmachendes Harz | 3 | 3 | 3 | 3 |
| Antidegradanzien | 4,8 | 9,6 | 9,6 | 9,6 |
| Mikrokristallines Paraffin | 2,2 | 2,2 | 2,2 | 2,2 |
| Zinkoxid | 2,7 | 2,7 | - | - |
| Stearinsäure | 2 | 2 | 2 | 2 |

| Zweiter Durchgang | | | | |
|---|---|---|---|---|
| Ruß N660 (Carbon Black) | - | 4 | 4 | 4 |
| Aromatenöl | - | 4 | 4 | 4 |
| Zinkoxid | - | - | 2,7 | 2,7 |
| Strontiumferrit | - | 100 | 100 | 100 |

| Dritter Durchgang | | | | |
|---|---|---|---|---|
| TBBS Beschleuniger | ,5 | ,5 | ,5 | ,5 |
| Löslicher Schwefel | 1,92 | 1,92 | 1,92 | 1,92 |

### 3. Schließlich zeigt Tabelle D das fortschrittliche neue Verfahren nach der Erfindung zur Herstellung einer vulkanisierbaren Gummimischung nach der Erfindung.

**Tabelle D**

| Standard-Mischverfahren gegenüber Verfahren mit optimierter Reaktion Farrel Banbury (BR Serie) | | |
|---|---|---|
| Punkt | Standardverfahren | Optimiertes Verfahren |
| 1. Vormischung | | |
| Schritt 1 | Start: Temp. = 50°C (122°F); rpm = 77 | Start: Temp. = 50°C (122°F); rpm = 77 |
| Schritt 2 | Innerhalb von 15 sek. Polymere hinzugeben | Innerhalb von 15 sek. Polymere hinzugeben |
| Schritt 3 | 1/2 Strontiumferrit + Harze + andere Stoffe (außer Paraffin & Stearinsäure) hinzugeben @ 1 min. (77rpm > 116 rpm) | 1/2 Strontiumferrit und das gesamte TESPD hinzugeben @ 45 sek. (77 rpm> 116 rpm) |
| Schritt 4 | 1/4 Strontiumferrit + Paraffin + Stearinsäure + 1/2 TESPD hinzugeben @ 2 min. (77 rpm > 116rpm) | Übrige Bestandteile (außer Öl) hinzugeben @ 1 min. 15 sek. (77 rpm > 116 rpm) |
| Schritt 5 | Öl hinzugeben @ 3 min. (77 rpm > 116 rpm) | Öl hinzugeben @ 2 min. (77 rpm > 116 rpm) |
| Schritt 6 | Stößel reinigen und säubern @ 4 min. (116 rpm) | Stößel reinigen und säubern @ 2 min. 45 sec. (116 rpm) |
| Schritt 6 | Entleeren bei 149°C (300°F) | Entleeren bei 149°C (300°F) |
| | **Maximaler Mischzyklus = 6 min.** | **Maximaler Mischzyklus = 6 min.** |

| 2. Vormischung | | |
|---|---|---|
| Schritt 1 | Starttemp. = 50°C (122°F) | |
| Schritt 2 | 1. Vormischung hinzugeben; dann feststampfen (77 rpm > 116 rpm) | 1. Vormischung hinzugeben; dann feststampfen (77 rpm > 116 rpm) |
| Schritt 3 | Übrige Bestandteile hinzugeben, incl. 1/2 Strontiumferrit und 1/2 TESPD @ 1 min. (77 rpm > 116 rpm > 155 rpm) | Übrige Bestandteile hinzugeben, incl. 1/2 Strontiumferrit und Öl @ 30-45 sec. (77 rpm > 116 rpm) |
| Schritt 4 | Entleeren bei 149°C (300°F) | Entleeren bei 149°C (300°F) |
| | **Maximaler Mischzyklus = 4 min.** | **Maximaler Mischzyklus = 4 min.** |

| Endmischung | | |
|---|---|---|
| Schritt 1 | Starttemp. = 38°C (100°F) | Starttemp. = 50°C (122°F) |
| Schritt 2 | 1/2 der 2. Vormischung + Vulkanisationsmittel + 1/2 der 2. Vormischung hinzugeben | 2. Vormischung + Vulkanisationsmittel hinzugeben (77 rpm) |
| Schritt 3 | Innerhalb von 30 sec. feststampfen (77 rpm) | Innerhalb von 30 sec. feststampfen (77 rpm > 116 rpm) |
| Schritt 4 | Entleeren bei 93.3°C (200°F) | Entleeren bei 93.3°C (200°F) |
| | **Maximaler Mischzyklus = 2.5 min.** | **Maximaler Mischzyklus = 2.5 min.** |

**Fig. 5** zeigt, dass die Ermüdungsfestigkeit erheblich steigt, überraschender Weise über die der schwarzen Standard-Reifenseitenwand hinaus, bei Verwendung von entweder 4 oder 6 phr TESPD und bei Anwendung der Mischtechnik zur Optimierung der Reaktion zwischen dem magnetischen Zusatzstoff und der Polymermatrix.

**Fig. 6** zeigt, dass die Beständigkeit gegen das Risswachstum gegenüber der Ferritmischung A erheblich verbessert wird und nur etwas geringer als bei der Standard-Reifenseitenwand ausfällt, wobei jedoch immer noch eine zufriedenstellende Mischung erreicht wird.

Die bevorzugten Versionen dieser Erfindung lauten wie folgt:

| | |
|---|---|
| Art des magnetischen Zusatzstoffs | Strontiumferrit |
| Zusatzmenge des magnetischen Zusatzstoffs | 50 phr bis 250 phr |
| Haftvermittler | TESPT und TESPD |
| Zusatzmenge des Haftvermittlers | 2 bis 8 phr |
| Phr-Bereich Naturkautschuk (NR) | 20 bis 70 phr |
| Phr-Bereich Polybutadien | 20 bis 70 phr |
| Phr-Bereich SBR Emulsion | 10 bis 30 phr |
| Phr-Bereich Carbon Black | 25 bis 60 phr |
| Art des Carbon Black | N 660, N 339, N 550 |
| Phr-Bereich Weichmacheröl | 8 bis 20 phr |
| Art des Weichmacheröls | aromatisch und naphthenisch |
| Phr-Bereich des klebrigmachenden Harzes | 0 bis 6 phr |
| Art des klebrigmachenden Harzes | Phenol und Kohlenwasserstoff |
| Phr-Bereich Antidegradanzien | 4 bis 10 phr |
| Arten von Antidegradanzien | Klasse der P-Phenylendiamine |
| Phr-Bereich des mikrokristallinen Paraffins | 2 bis 6 phr |
| Phr-Bereich Zinkoxid | 2 bis 6 phr |
| Phr-Bereich Stearinsäure | 1 bis 4 phr |
| Art des Beschleunigers | TBBS und CBS |
| Phr-Bereich des Beschleunigers | 0,3 bis 1,5 phr |
| Schwefelart | löslicher Schwefel und/oder 20% ölbehandeltes Crystex |
| Phr-Bereich Schwefel (löslicher Schwefel) | 1,5 bis 2,5 phr |
| Phr-Bereich Schwefel (ölbehandeltes Crystex) | 1,88 bis 3,13 phr |

Alle in der Maßeinheit "phr" angegebenen Maße sind nach Gewicht zu verstehen. Das Verhältnis ist angegeben auf 100 Teile nach Gewicht von allen Elastomeren.

Diese Erfindung ermöglicht hohe Zusatzmengen eines nicht verstärkenden oder gering verstärkenden Magnetpulvers in der Mischung für die Reifenseitenwand für das Seitenwand-Torsionssensor-System, wobei die mechanische Güte der Seitenwandmischung erhalten bleibt. Diese Erfindung kann für alle Reifenarten angewendet werden, bei denen das Seitenwand-Torsionssensor-System verwendet wird, sowie für alle anderen Gummiartikel, die magnetische Signale erzeugen, wie - zum Beispiel - Antriebsriemen oder Förderbänder zum Zweck der Zählung der ausgeführten Zahl von Umdrehungen.

## Patentansprüche

1. Vulkanisierbare Gummimischung bestehend aus
- mindestens einem schwefelvulkanisierbaren Elastomer, ausgewählt aus konjugierten Dien-Homopolymeren und -Copolymeren und Copolymeren von mindestens einer konjugierten Dien- und aromatischen Vinylverbindung,
- festen magnetisierbaren Partikeln in einer Dosis von mindestens der Hälfte des Gewichts des besagten schwefelvulkanisierbaren Elastomers oder Elastomers,
- wobei besagte feste magnetisierbare Partikel eine größere Steifigkeit als das schwefelvulkanisierbare Elastomer aufweisen, und
- einem organo-funktionalen Silanmaterial mit haftvermittelnden Eigenschaften zwischen dem besagten schwefelvulkanisierbaren Elastomer oder Elastomer und den besagten festen magnetisierbaren Partikeln.

2. Vulkanisierte Gummimischung nach Anspruch 1, bestehend aus
- 100 Teilen nach Gewicht von mindestens einem schwefelvulkanisierbaren Elastomer ausgewählt aus konjugierten Dien-Homopolymeren und -Copolymeren und Copolymeren von mindestens einer konjugierten Dien- und aromatischen Vinylverbindung,
- wobei die Dosis der besagten festen magnetisierbaren Partikel höchstens 250 Teile pro hundert Teile nach Gewicht von besagtem schwefelvulkanisierbaren Elastomer oder Elastomer (250 phr) beträgt.

3. Vulkanisierbare Gummimischung nach Anspruch 1, wobei die das besagte organo-funktionale Silanmaterial Organosilan-Polysulfid ist.

4. Vulkanisierbare Gummimischung nach Anspruch 3, bestehend aus Organosilan-Polysulfid in einer Dosis von 2 bis 8 Teilen pro hundert Teilen nach Gewicht von besagtem schwefelvulkanisierbaren Elastomer oder Elastomer.

5. Gummimischung nach Anspruch 1, wobei die festen magnetisierbaren Partikel mindestens aus Eisenoxid, Strontiumferrit oder Bariumferrit ausgewählt werden.

6. Gummimischung nach Anspruch 3, wobei das Organosilan-Polysulfid aus 3,3'-bis-(Triethoxisilylpropyl)-Tetrasulfid (TESPT) und 3,3'-bis-(Triethoxisilylpropyl)-Disulfid (TESPD) ausgewählt wird.

7. Gummimischung nach Anspruch 2, 3 und 4, bestehend aus
- 20 bis 100 phr nach Gewicht Naturkautschuk,
- 0 bis 70 phr nach Gewicht Polybutadien-Kautschuk,
- 0 bis 30 phr nach Gewicht eines Styrol-Butadien-Kautschuks, hergestellt durch eine Emulsionspolymerisation,
- 50 bis 250 phr nach Gewicht Strontiumferrit,
- 2 bis 8 phr nach Gewicht eines Organosilan-Polysulfids, ausgewählt aus 3,3'-bis-(Triethoxisilylpropyl)-Tetrasulfid (TESPT) und 3,3'-bis-(Triethoxisilylpropyl)-Disulfid (TESPD),
- 25 bis 60 phr nach Gewicht von Ruß (Carbon Black), ausgewählt aus mindestens den Ruß-Arten N 339, N 660 und N 550,
- 8 bis 20 phr nach Gewicht Weichmacheröl,
- 0 bis 6 phr nach Gewicht klebrig machendes Harz,
- 4 bis 10 phr nach Gewicht eines Antidegradans, ausgewählt aus der Klasse der P-Phenylendiamine,
- 2 bis 6 phr nach Gewicht mikrokristallines Paraffin,
- 2 bis 6 phr nach Gewicht Zinkoxid,
- 1 bis 4 phr nach Gewicht Stearinsäure,
- 0,3 bis 1,5 phr nach Gewicht Beschleuniger, ausgewählt aus mindestens Benzothiazyl-2-Tert.-Butyl-Sulfenamid (TBBS) und Benzothiazyl-2-Cyclohexyl-Sulfenamid und
- 1,5 bis 2,5 phr Schwefel.

8. Gummimischung nach Anspruch 1, wobei die Gummimischung für Fahrzeugreifen verwendet wird.

9. Gummimischung nach Anspruch 1, wobei die Gummimischung für die äußere Seitenwand eines Reifens verwendet wird.

10. Vulkanisierter Gummiartikel, **dadurch gekennzeichnet,** dass er eine Gummimischung nach Anspruch 1 enthält.

11. Artikel nach Anspruch 10, wobei besagter Artikel ein Fahrzeugreifen ist.

12. Fahrzeugreifen nach Anspruch 11, wobei der besagte Reifen zwei Seitenwände hat und mindestens diejenige Seitenwand, welche an der axialen Innenseite eines Fahrzeuges positioniert werden soll, eine Gummimischung nach Anspruch 2 enthält.

13. Fahrzeugreifen nach Anspruch 12, wobei die besagte Seitenwand auf der axialen Innenseite in diskreten Abständen über ihren Umfang verteilt magnetisiert wird.

14. Verfahren der Herstellung einer Gummimischung, wobei die Gummimischung 100 Teile nach Gewicht von mindestens einem schwefelvulkanisierbaren Elastomer, ausgewählt aus konjugierten Dien-Homopolymeren und -Copolymeren und Copolymeren von mindestens einer konjugierten Dien- und aromatischen Vinylverbindung, 50 bis 250 phr von festen magnetisierbaren Partikeln (von größerer Steifigkeit als die Gummiverbindungen) und 2 bis 8 phr eines Organosilan-Polysulfids enthält, **dadurch gekennzeichnet**, dass das Herstellungsverfahren der Gummimischung in mindestens drei verschiedene Mischstufen unterteilt ist:
a) Herstellung einer ersten Vormischung durch Mischen des gesamten Elastomers, der Hälfte der festen magnetisierbaren Partikel und dem gesamten Organosilan-Polysulfid,
b) Herstellung einer zweiten Vormischung durch Mischen der ersten Vormischung mit allen übrigen Bestandteilen, einschließlich der anderen Hälfte der festen magnetisierbaren Partikel, außer den Beschleunigern und dem Schwefel,
c) Vervollständigung der Gummimischung durch Mischen der zweiten Gummimischung mit den Beschleunigern und dem Schwefel.
